# EUROPÄISCHE PATENTSCHRIFT

(11) **EP 0 848 040 B1**
(45) Veröffentlichungstag und Bekanntmachung des Hinweises auf die Patenterteilung: **06.11.2002**
(21) Anmeldenummer: 97122066.0
(22) Anmeldetag: 15.12.1997
(51) Int. Cl.: C09B 47/30, C09B 67/50

(54) **Verfahren zur Herstellung von metallfreiem Phthalocyanin unter Steuerung der gebildeten Modifikation**
Method of producing metal-free phthalocyanine with a control of the produced modification
Procédé de fabrication de phtalocyanine non métallisée permettant le contrôle de la modification formée

(30) Priorität: 16.12.1996 DE 19652241
(43) Veröffentlichungstag der Anmeldung: 17.06.1998
(73) Patentinhaber: BASF AKTIENGESELLSCHAFT, 67056 Ludwigshafen (DE)
(72) Erfinder: Schütze, Andrea Birgit, Dr., 67547 Worms (DE); Scherhag, Frank, Dr., 67117 Limburgerhof (DE); Klopp, Ingo, Dr., 67245 Lambsheim (DE); Hartmann, Anette, 67489 Kirrweiler (DE)

(56) Entgegenhaltungen:
- EP-A- 0 093 331
- EP-A- 0 570 750
- EP-A- 0 658 604
- FR-A- 2 307 022
- FR-A- 2 321 527
- FR-A- 2 364 954
- FR-A- 2 372 870

## Beschreibung

Die vorliegende Erfindung betrifft ein neues Verfahren zur Herstellung von metallfreiem Phthalocyanin unter Steuerung der gebildeten Modifikation durch reduktive Cyclisierung von ortho-Phthalodinitril in Anwesenheit eines aliphatischen Alkohols, eines Redoxkatalysators und einer anorganischen Base.

Weiterhin betrifft die Erfindung eine neue Modifikation des metallfreien Phthalocyanins, welche durch ein Röntgenpulverdiagramm (CuK_{α}) mit den wesentlichen Linien bei 2θ-Winkeln von 5.0, 8.3, 9.6, 13.0, 14.4, 16.8, 21.5, 24.2 und 26.8° gekennzeichnet ist.

Von metallfreiem Phthalocyanin 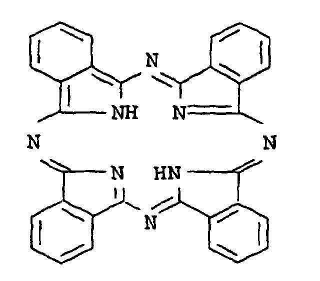 das zunehmendes Interesse als Pigment für den blauen bis grünen Farbtonbereich gewinnt, sind verschiedene kristalline Phasen bekannt ("The Phthalocyanines", CRC Press Inc., 1983). In der Literatur werden die Modifikationen α, β, X und π (π als Gemisch mit X-H₂Pc und π-CoPc; s. auch US-A-3 357 989, DE-A-22 18 788), τ (Chem. Letters 1984, S.2037-2040) sowie γ (DE-A-42 34 922) beschrieben.

Nach dem in der EP-A-658 604 beschriebenen Verfahren, bei dem ortho-Phthalodinitril (o-PDN) in Gegenwart von Glykolen, Hydroxybenzolen und anorganischen Basen reduktiv cyclisiert wird, können verschiedene Modifikationen des metallfreien Phthalocyanins (β-, γ-, X- und π-H₂Pc) hergestellt werden, wobei jedoch in vielen Fällen die Zugabe von Impfkristallen der gewünschten Modifikation erforderlich ist, die separat synthetisiert werden müssen. Außerdem muß das erhaltene Phthalocyanin in der Regel noch einer Formierung unterzogen werden, bevor es zur Pigmentierung eingesetzt werden kann.

Der Erfindung lag daher die Aufgabe zugrunde, den genannten Mängeln abzuhelfen und ein verfahrenstechnisch einfaches, wirtschaftliches Verfahren zur Herstellung von metallfreiem Phthalocyanin bereitzustellen, welches die gezielte Synthese der verschiedenen Phthalocyaninmodifikationen ermöglicht.

Demgemäß wurde ein Verfahren zur Herstellung von metallfreiem Phthalocyanin durch reduktive Cyclisierung von ortho-Phthalodinitril in Anwesenheit eines aliphatischen Alkohols, eines Redoxkatalysators und einer anorganischen Base gefunden, welches dadurch gekennzeichnet ist, daß man die Cyclisierung in Gegenwart eines oder mehrerer Phthalocyaninderivate aus der Gruppe der Phthalocyaninsulfonsäuren und -carbonsäuren und deren Alkalimetall-, Ammonium- und Alkylammoniumsalzen, der aminosubstituierten und aminomethylierten Phthalocyanine und deren Umsetzungsprodukten mit Alkylierungsmitteln, Sulfonsäuren, Sulfonsäurechloriden und Carbonsäurechloriden, der imidomethylen- und amidomethylensubstituierten Phthalocyanine, der alkyl-, aryl- und cyanosubstituierten Phthalocyanine, der hydroxy- und alkoxysubstituierten Phthalocyanine und deren Umsetzungsprodukten mit Tetraalkyl- und Tetraalkoxysilanen und der halogenierten Phthalocyanine durchführt.

Die eingesetzten Phthalocyaninderivate können sowohl metallfrei (H₂Pc-Derivate) als auch metallhaltig sein, wobei unter den metallhaltigen Derivaten Kupferphthalocyaninderivate (CuPc-Derivate) bevorzugt sind.

Der Substitutionsgrad dieser Derivate kann bis zu 8,0 betragen, vorzugsweise beträgt er 0,1 bis 4,0, insbesondere 1,0 bis 3,5.

Besonders geeignete Phthalocyaninderivate entsprechen der allgemeinen Formel I 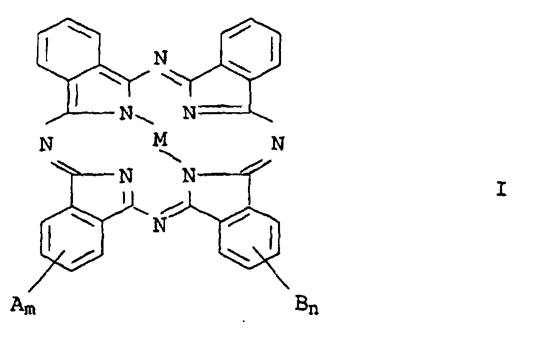 in welcher die Variablen folgende Bedeutung haben:
- M: Kupfer oder 2 Wasserstoffatome;
- A und B: unabhängig voneinander folgende Substituenten: -SO₃M¹, -CO₂M¹, -SO₃H·HNR¹R², -CH₂NR³R⁴, -NR³R⁴, -CH₂NR³R⁴·HO₃SR⁵, -NR³R⁴·HO₃SR⁵, -NHCOR¹, -CH₂NHCOR¹, -NHSO₂R¹, -CH₂NHSO₂R¹, -SO₂NHR¹, -CONHR¹, C₁-C₆-Alkyl, Aryl, Cyano, -OR⁶ oder Halogen, wobei
R¹ und R² unabhängig voneinander Wasserstoff oder C₂-C₂₀-Alkenyl oder C₁-C₂₀-Alkyl bedeuten, das durch -NR⁷R⁸ substituiert sein kann, wobei R⁷ und R⁸ unabhängig voneinander für C₁-C₂₀-Alkyl, C₅-C₈-Cycloalkyl, das ein oder mehrere Heteroatome enthalten kann, oder Wasserstoff stehen,
R³ und R⁴ unabhängig voneinander Wasserstoff, C₁-C₂₀-Alkyl, C₂-C₂₀-Alkenyl oder Aryl bedeuten oder unter Ausbildung eines das Stickstoffatom sowie gegebenenfalls weitere Heteroatome oder Carbonyl- oder Sulfonylgruppen enthaltenden, 5- oder 6-gliedrigen Rings, der benzanelliert sein kann, miteinander verbunden sind,
R⁵ für p-(C₁₀-C₂₀-Alkyl)phenyl oder C₂-C₂₀-Alkenyl steht,
R⁶ Wasserstoff, C₁-C₆-Alkyl oder -Si(R⁹)₃ bedeutet, wobei R⁹ für C₁-C₄-Alkyl, C₂-C₄-Alkenyl oder C₁-C₄-Alkoxy steht, und
M¹ Wasserstoff oder ein Alkalimetall bedeutet;
- m: eine ganze oder gebrochene Zahl > 0 bis 4,0;
- n: eine ganze oder gebrochene Zahl von 0 bis 4,0.

Als Beispiele für die in Formel I enthaltenen Reste A und B bzw. für deren Substituenten seien im einzelnen genannt:
geradkettige oder verzweigte C₁-C₂₀-Alkylreste wie Methyl, Ethyl, Propyl, Isopropyl, Butyl, Isobutyl, tert.-Butyl, Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436);
geradkettige und verzweigte C₂-C₂₀-Alkenylreste wie Ethenyl, Propenyl, Isopropenyl, Butenyl, Isobutenyl, Pentenyl, Hexenyl, Heptenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl und Eicosenyl;
geradkettige oder verzweigte C₁-C₆-Alkoxyreste wie Methoxy, Ethoxy, Propoxy, Isopropoxy, Butoxy, Isobutoxy, tert.-Butoxy, Pentoxy, Isopentoxy, Neopentoxy, tert.-Pentoxy und Hexoxy;
C₅-C₈-Cycloalkylreste, die Heteroatome wie Sauerstoff und/oder Stickstoff als Ersatz für ein oder mehrere Kohlenstoffatome enthalten können, aber nicht über diese gebunden sind, wie Cyclopentyl, Cyclohexyl, Cycloheptyl, Cyclooctyl, Tetrahydrofuryl, Pyrrolidyl, Piperidyl, Piperazyl und Morpholinyl;
Arylreste wie Naphthyl und insbesondere Phenyl;
p-(C₁₀-C₂₀-Alkyl)phenylreste wie p-Decyl-, p-Undecyl-, vor allem p-Dodecyl-, auch p-Tridecyl-, p-Tetradecyl-, p-Pentadecyl-, p-Hexadecyl-, p-Heptadecyl-, p-Octadecyl-, p-Nonadecyl- und p-Eicosylphenyl;
Carboxy, bevorzugt Sulfo und Mono-(C₁₀-C₂₀-alkyl)ammoniumsulfonatreste wie Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylammoniumsulfonatreste;
Mono- und Di-(C₁-C₆-alkyl)aminoreste wie Mono- und Dimethylamino, Mono- und vor allem Diethylamino, Mono- und Dipropylamino, Monound Diisopropylamino, Mono- und Dibutylamino, Mono- und Diisobutylamino, Mono- und Dipentylamino und Mono- und Dihexylamino sowie vor allem Mono- und bevorzugt Di-(C₁-C₆-alkyl)aminomethylreste, in denen die genannten Aminoreste über eine Methylengruppe an das Phthalocyaningerüst gebunden sind;
Umsetzungsprodukte der Mono- und Di-(C₁-C₆-alkyl)aminoreste und bevorzugt der entsprechenden Aminomethylreste mit C₁₀-C₂₀-Alkylphenylsulfonsäuren wie p-Decyl-, p-Undecyl-, vor allem p-Dodecyl-, auch p-Tridecyl-, p-Tetradecyl-, p-Pentadecyl-, p-Hexadecyl-, p-Heptadecyl-, p-Octadecyl-, p-Nonadecyl- und p-Eicosylphenylsulfonsäuren, wobei die Alkylreste in o-, m- oder vorzugsweise p-Stellung zur Sulfonsäuregruppierung stehen,
   z.B. -CH₂-N(C₂H₅)₂·HO₃S-Ph-4-C₁₂H₂₅ und
   -CH₂-NH(C₂H₅)·HO₃S-Ph-4-C₁₂H₂₅;
das Aminstickstoffatom enthaltende und darüber gebundene Heterocycloalkyl- und Heteroarylreste wie 4-Morpholinyl, Pyrrolidyl, Piperidyl, Piperazyl, Pyrazolyl, Pyrryl, Pyrazyl, Imidazyl, vor allem N-Phthalimidyl und N-Saccharinyl sowie bevorzugt die entsprechenden, über -CH₂- an das Phthalocyaningerüst gebundenen Reste;
Mono-(C₁-C₂₀-alkylcarbonyl)aminoreste wie Monomethyl-, Monoethyl-, Monopropyl-, Monoisopropyl-, Monobutyl-, Monoisobutyl-, tert. -Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-. Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecylund Monoeicosylcarbonylamino sowie die entsprechenden über -CH₂- an das Phthalocyaningerüst gebundenen Aminoreste;
MonoMono-(C₁-C₂₀-alkylsulfonyl)aminoreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylsulfonylamino sowie die entsprechenden über -CH₂- an das Phthalocyaningerüst gebundenen Aminoreste;
Mono-(C₁-C₂₀-alkylamino)sulfonylreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecylund Monoeicosylaminosulfonyl, wobei die Alkylreste eine endständige Amino-, Mono- oder Di(C₁-C₆-alkyl)aminogruppe tragen können;
Mono-(C₁-C₂₀-alkylamino)carbonylreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-1 Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecylund Monoeicosylaminocarbonyl, wobei die Alkylreste eine endständige Amino-, Mono- oder Di(C₁-C₆-alkyl)aminogruppe tragen können;
Cyano, Hydroxy und Halogen wie Brom und vor allem Chlor;
Tri-(C₁-C₄-alkyl)silyloxy-, Tri-(C₂-C₄-alkenyl)silyloxy- und Tri-(C₁-C₄-alkoxy)silyloxyreste wie Trimethyl-, Trivinyl- und Trimethoxysilyloxy.

Der Substitutionsgrad (Summe m + n) des Phthalocyaninderivates I kann bis zu 8 betragen, d.h. das Phthalocyaningerüst kann 8 gleiche Substituenten (A = B) oder 2 verschiedene Substituenten A und B (A ≠ B), wobei m + n maximal 8 beträgt, tragen.

Bevorzugt liegt der Substitutionsgrad bei 0,1 bis 4 und besonders bevorzugt bei 0,1 bis 3,5.

Vorzugsweise ist das Phthalocyaninderivat I nur durch eine Substituentenart substituiert (n = 0 bzw. A = B), geeignet sind jedoch z.B. auch Phthalocyaninderivate, die anhalogeniert (vor allem anchloriert) oder ansulfoniert sind und einen zusätzlichen, von Halogen bzw. vom Sulfonsäurerest verschiedenen Substituenten tragen.

Die Phthalocyaninderivate I sind an sich bekannt bzw. nach bekannten Methoden herzustellen (z.B. EP-A-535 774, DE-A-25 16 054, EP-A-538 784 und DE-A-29 05 114).

In der Regel setzt man beim erfindungsgemäßen Verfahren 1 bis 20 Gew.-%, bevorzugt 3 bis 15 Gew.-% Phthalocyaninderivat I, jeweils bezogen auf die eingesetzte Menge an o-PDN, ein.

Die insgesamt gewünschte Menge Phthalocyaninderivat I kann bereits zu Beginn der Synthese vorliegen, man kann das Phthalocyaninderivat I aber auch stufenweise nach einem oder mehreren Zeitintervallen zugeben. Selbstverständlich kann man nur ein Phthalocyaninderivat I oder mehrere, z.B. zwei, verschiedene Derivate I einsetzen.

Als Lösungsmittel werden beim erfindungsgemäßen Verfahren vorzugsweise aliphatische Alkohole wie Glykole, Glykolmonoether, Aminoalkohole und Dialkylaminoalkohole, sowie deren Mischungen eingesetzt, die gleichzeitig auch als Reduktionsmittel wirken.

Geeignet sind dabei insbesondere sowohl Mono- als auch Oligo(insbesondere Di- und Tri-) und Poly-C₂-C₅-alkylenglykole und deren Mono-C₁-C₈-alkyl- und Monoarylether, wobei die auf Propylen basierenden Verbindungen bevorzugt und die auf Ethylen basierenden Verbindungen besonders bevorzugt sind, sowie Amino- und N,N-Di-(C₁-C₄-alkyl)amino-C₂-C₆-alkohole.

Als Beispiele seien genannt: Ethylenglykol, 1,2- und 1,3-Propylenglykol, Butylenglykole, Pentylenglykole, Di-, Triund Tetraethylen- und -propylenglykole, Polyethylen- und Polypropylenglykole, Ethylenglykolmonomethyl-, -ethyl-, -propyl-, -butyl- und -hexylether und Propylenglykolmonomethyl-, -ethyl-, -propyl-, -butyl- und -hexylether, Di-, Tri- und Tetraethylenglykolmonomethyl-, -ethyl- und -butylether und Di-, Tri- und Tetrapropylenglykolmonomethyl-, -ethyl- und -butylether, Ethylenund Propylenglykolmonophenylether sowie Aminoethanol, Aminopropanol, Aminopropan-2-ol, N,N-Dimethylaminoethanol, N,N-Dimethylaminopropanol und N,N-Dimethylaminopropan-2-ol.

Die Menge an Lösungsmittel ist an sich nicht kritisch und wird zweckmäßig so gewählt, daß eine gut rührbare Pigmentsuspension vorliegt. Vorteilhaft ist z.B. ein Gewichtsverhältnis von Lösungsmittel zu o-PDN von 20:1 bis 1:1, insbesondere 5:1 bis 2:1. Das Lösungsmittel kann nach der Umsetzung regeneriert und für weitere Umsetzungen verwendet werden.

Als Redoxkatalysator werden bevorzugt aromatische Verbindungen der Formel II eingesetzt. Geeignet sind hier Naphthalin und vor allem Benzol, die jeweils mindestens einen, bevorzugt 2, aber auch bis zu 4 Hydroxy- und/oder Mercaptogruppen als Substituenten X tragen. Weiterhin können die aromatischen Ringe auch bis zu 5 Substituenten Y tragen: Hydroxy, Mercapto, Amino, Mono- und Di(C₁-C₆-alkyl)amino, wie Monomethyl-, Monoethyl- und Monobutylamino, Dimethyl-, Diethyl- und Dibutylamino, Halogen, wie Chlor und Brom, C₁-C₆-Alkyl, bevorzugt Methyl und Ethyl, C₁-C₆-Alkoxy, bevorzugt Methoxy und Ethoxy, und C₁-C₆-Alkoxycarbonyl, bevorzugt Methoxy- und Ethoxycarbonyl. Die Substituenten X und Y können dabei jeweils gleich oder verschieden sein, und ihre Summe (m + n) soll ≤ 6 sein.

Beispiele für geeignete Redoxkatalysatoren II sind: α- und vor allem β-Naphthol, 2-, 3- und 4-Aminophenol, o-, m- und p-Kresol (2-, 3- und 4-Methylphenol), bevorzugt Phenol, Thiophenol, o-, mund p-Mercaptophenol, besonders bevorzugt Pyrogallol (1,2,3-Trihydroxybenzol) und die Dihydroxybenzole Brenzkatechin (1,2), Resorcin (1,3) und vor allem Hydrochinon (1,4). Selbstverständlich können auch Mischungen dieser Verbindungen eingesetzt werden.

Die Menge an Redoxkatalysator II beträgt im allgemeinen 1 bis 25, bevorzugt 2 bis 15 und besonders bevorzugt 2 bis 12 mol-%, bezogen auf o-PDN.

Als anorganische Base eignen sich insbesondere Alkalimetallhydroxide, -oxide und -carbonate sowie auch deren Mischungen. Hervorzuheben sind dabei Kaliumoxid, -carbonat und vor allem -hydroxid besonders Natriumoxid, -carbonat und vor allem -hydroxid und Lithiumoxid, -carbonat und vor allem -hydroxid, die bevorzugt als wasserfreier Feststoff oder im Alkohol gelöst eingesetzt werden. Man kann auch Ammoniakgas als Base einsetzen.

In der Regel werden 1 bis 50, vorzugsweise 2 bis 25 mol-% anorganische Base, bezogen auf o-PDN, eingesetzt.

Das Alkalimetall wird beim erfindungsgemäßen Verfahren nicht in das Phthalocyanin eingebaut.

Die Reaktionstemperatur beträgt im allgemeinen 80 bis 200°C, bevorzugt 100 bis 200°C und besonders bevorzugt 140 bis 180°C.

Ein Vorteil des erfindungsgemäßen Verfahrens ist, daß man drucklos arbeiten kann.

Mit Hilfe des erfindungsgemäßen Verfahrens können verschiedene Modifikationen des metallfreien Phthalocyanins in einfacher Weise durch leichte Variation der Reaktionsparameter gezielt hergestellt werden.

Insbesondere eignet sich das erfindungsgemäße Verfahren zur Herstellung der π-, τ- und γ-Modifikation von H₂Pc, die alle ohne den Einsatz von Impfkristallen der entsprechenden Modifikation erhalten werden können.

Außerdem kann mit Hilfe des erfindungsgemäßen Verfahrens eine neue Modifikation von H₂Pc hergestellt werden, die durch die eingangs angegebenen Linien im Röntgenpulverdiagramm sowie durch ein IR-Spektrum mit starken Absorptionsbanden bei 1333, 1320, 1118, 1110, 1093, 1005, 873, 748, 735, 730 und 716 cm⁻¹ charakterisiert ist und sich durch einen extrem rotstichigen Farbton auszeichnet.

So kann die neue Modifikation des metallfreien Phthalocyanins vorteilhaft nach folgenden bevorzugten Verfahrensvarianten erhalten werden: Durch reduktive Cyclisierung von o-PDN
a) bei Reaktionstemperaturen von 100 bis 200°C, insbesondere 100 bis 150°C, in Diethylenglykol und in Gegenwart von Lithiumhydroxid als Base, einem Redoxkatalysator II, der mindestens 2, bevorzugt 3 Hydroxygruppen trägt, und etwa 6 bis 10 Gew.-% eines CuPc-Derivates I, das durch 0,5 bis 3,0, vorzugsweise 1,0 bis 2,0 Sulfonsäuregruppen/Molekül substituiert ist, oder etwa 9 bis 15 Gew.-% eines H₂Pc-Derivates I, das mit einem Substitutionsgrad von 1,5 bis 4,0, vor allem 1,5 bis 3,0, durch einen der Reste -CH₂NR²R^{3·}HO₃SR⁴ substituiert ist, oder
b) bei 150 bis 200°C in Ethylenglykolmonobutylether oder Diethylenglykolmonomethylether und in Gegenwart von Natriumhydroxid als Base, einem 2 Hydroxygruppen tragenden Redoxkatalysator II und etwa 9 bis 15 Gew.-% eines H₂Pc-Derivates I, das durch einen der Reste -CH₂NR²R³, bei denen R² und R³ zusammen mit dem Aminstickstoffatom einen Heterocyclus bilden (bevorzugt Phthalimidyl oder Saccharinyl), mit einem Substitutionsgrad von 2,5 bis 5,0.

Die Bildung der π-Modifikation des metallfreien Phthalocyanins erfolgt erfindungsgemäß vorzugsweise bei Reaktionstemperaturen von 100 bis 200°C, vor allem bei 100 bis 180°C, in Diethylenglykol und in Anwesenheit von Lithiumhydroxid als Base, einem 2 Hydroxygruppen tragenden Redoxkatalysator II und etwa 3 bis 5 Gew.-% einer Kupferphthalocyaninsulfonsäure I mit einem Substitutionsgrad von 0,5 bis 3,0, vorzugsweise 1,0 bis 2,0, oder etwa 1 bis 20 Gew.-% einer metallfreien Phthalocyaninsulfonsäure mit dem gleichen Substitutionsgrad.

Die τ-Modifikation von H₂Pc läßt sich erfindungsgemäß bei 100 bis 200°C, bevorzugt 120 bis 180°C,
a) in Ethylenglykolmonobutylether und in Gegenwart von Natriumhydroxid als Base, einem mindestens 2 Hydroxygruppen tragenden Redoxkatalysator II und etwa 5 bis 15 Gew.-% eines Umsetzungsproduktes (I) von chlorierter Kupferphthalocyaninsulfonsäure (Sulfonierungsgrad 0,5 bis 3,0, vorzugsweise 1,0 bis 2,0; Chlorierungsgrad 0,1 bis 3,0, insbesondere 0,1 bis 1,0) mit einem Mono-(C₁-C₂₀)alkylamin oder etwa 5 bis 10 Gew.-% eines CuPc-Derivates I, das durch einen der Reste -CH₂NR²R³, bei denen R² und R³ zusammen mit dem Aminstickstoffatom einen Heterocyclus bilden (vor allem Saccharinyl), mit einem Substitutionsgrad von 2,0 bis 4,0, insbesondere 2,5 bis 4,0, oder
b) in Ethylenglykolmonophenylether und in Gegenwart von Lithiumhydroxid als Base, einem bevorzugt 3 Hydroxygruppen tragenden Redoxkatalysator II und etwa 1 bis 10 Gew.-%, bevorzugt 4 bis 6 Gew.-%, eines Umsetzungsproduktes (I) von metallfreiem, N,N-di-(C₁-C₆-alkyl)aminomethyliertem Phthalocyanin (Substitutionsgrad 0,5 bis 3,5, vor allem 2,0 bis 3,5) mit einer p-(C₁₀-C₂₀-)alkylsubstituierten Benzolsulfonsäure
herstellen.

Die γ-Modifikation von H₂Pc kann erfindungsgemäß bei 100 bis 200°C beispielsweise in Ethylen- und Diethylenglykol oder deren Monomethyl- oder Monobutylethern unter Verwendung von Lithium-, Natrium- oder Kaliumhydroxid oder Ammoniak als Base bei 100 bis 200°C hergestellt werden. Die dabei eingesetzten Redoxkatalysatoren II tragen bevorzugt 2 oder 3 Hydroxylgruppen. Als Phthalocyaninderivate I eignen sich vor allem N,N-di-(C₁-C₆-alkyl)aminomethyliertes CuPc mit einem Substitutionsgrad von 2,0 bis 4,0, vorzugsweise 2,0 bis 3,5, in einer Menge von etwa 1 bis 10 Gew.-%, deren Umsetzungsprodukte mit p-(C₁₀-C₂₀-alkyi)substituierten Benzolsulfonsäuren in einer Menge von etwa 1 bis 20 Gew.-%, bevorzugt 3 bis 15 Gew.-%, CuPc-Derivate I, die durch Reste -CH₂NR³R⁴, bei denen R³ und R⁴ zusammen mit dem Aminstickstoffatom einen Heterocyclus bilden (vor allem Phthalimidyl und Saccharinyl), mit einem Substitutionsgrad von 1,5 bis 3,5 in einer Menge von etwa 1 bis 20 Gew.-%, insbesondere 6 bis 9 Gew.-%, sowie Umsetzungsprodukte von N,N-di-(C₁-C₆-alkyl)aminomethyliertem H₂Pc (Substitutionsgrad 0,5 bis 3,5, bevorzugt 1,0 bis 3,0) mit p-(C₁₀-C₂₀-alkyl)substituierten Benzolsulfonsäuren in einer Menge von etwa 1 bis 20 Gew.-%, vorzugsweise 3 bis 10 Gew.-%.

Verfahrenstechnisch kann man beim erfindungsgemäßen Verfahren wie folgt vorgehen: o-PDN, Phthalocyaninderivat I und Redoxkatalysator II werden gegebenenfalls unter Erwärmen im Lösungsmittel gelöst. Anschließend wird die anorganische Base, gelöst im Lösungsmittel oder als Feststoff, zugegeben. Die Reaktionsmischung wird dann auf die gewünschte Reaktionstemperatur erhitzt und so lange bei dieser Temperatur gehalten, bis o-PDN quantitativ verbraucht ist, was im allgemeinen 15 min bis etwa 8 h dauert und von der Reaktionstemperatur abhängt. Während dieser Zeit kann der Reaktionsmischung weiteres Phthalocyaninderivat I zugegeben werden, wobei das zu Beginn der Synthese eingesetzte Derivat I oder ein anderes Derivat I verwendet werden kann.

Die Aufarbeitung des Reaktionsgemisches auf das Produkt kann, zweckmäßigerweise nach Abkühlen auf etwa 80 bis 100°C, durch Filtration, Waschen mit dem für die Reaktion verwendeten Lösungsmittel oder anderen Alkoholen wie Methanol oder Ethanol oder N-Methylpyrrolidon und anschließend gewünschtenfalls mit Wasser oder Aceton und Trocknen erfolgen.

Mit Hilfe des erfindungsgemäßen Verfahrens kann metallfreies Phthalocyanin gezielt in den gewünschten Modifikationen (den bekannten π-, τ und γ-Modifikationen, die in Gegenwart aromatischer Lösungsmittel modifikationsstabil sind, und der hier beschriebenen neuen Modifikation) in der gewünschten Teilchengröße und Teilchengrößenverteilung auf verfahrenstechnisch einfache und wirtschaftliche Weise in hoher Reinheit und guter Ausbeute hergestellt werden. Von besonderem Vorteil ist, daß das erhaltene Phthalocyanin direkt ohne die sonst üblichen Formierungsschritte (Mahlung und/oder Lösungsmittelbehandlung) als Pigment zum Einfärben von Druckfarben, Lacken und Kunststoffen verwendet werden kann.

### Beispiele

### Herstellung von metallfreiem Phthalocyanin (H₂Pc) der π-, τ- und γ-Modifikation und der neuen Modifikation

120 g ortho-Phthalodinitril (o-PDN), a g des Phthalocyanderivates I 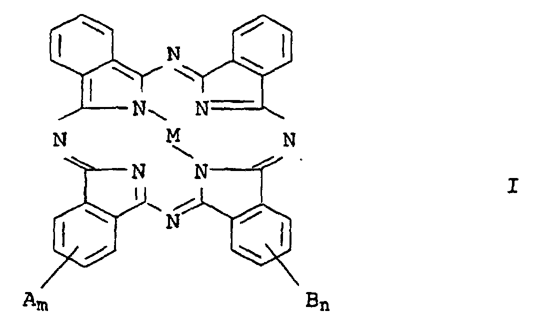 und b g des Redoxkatalysators II wurden unter Rühren in c g des Alkohols G auf 100°C erhitzt. Nach Zugabe von d g der anorganischen Base B wurde die Mischung noch 4 h auf T°C erhitzt.

In den Beispielen 45 bis 47 wurden nach 2-stündigem Erhitzen auf 160°C weitere 3,6 g (Bsp. 45), 7,2 g (Bsp. 46) bzw. 10,8 g (Bsp. 47) des Phthalocyaninderivates I zugegeben. Anschließend wurde weitere 2 h auf 160°C erhitzt.

Nach Abkühlen auf 80-100°C wurde das Produkt abfiltriert, zunächst mit dem Alkohol G und dann mit Wasser gewaschen und anschließend bei 80-100°C getrocknet.

Einzelheiten zu diesen Versuchen sowie deren Ergebnisse sind in der folgenden Tabelle zusammengestellt.

Dabei bedeuten:

| | |
|---|---|
| BG ≙ | Ethylenglykolmonobutylether |
| DG ≙ | Diethylenglykol |
| MDG ≙ | Diethylenglykolmonomethylether |
| PG ≙ | Ethylenglykolmonophenylether |
| DMAE ≙ | N,N-Dimethylaminoethanol |
| H ≙ | Hydrochinon |
| P ≙ | Pyrogallol |

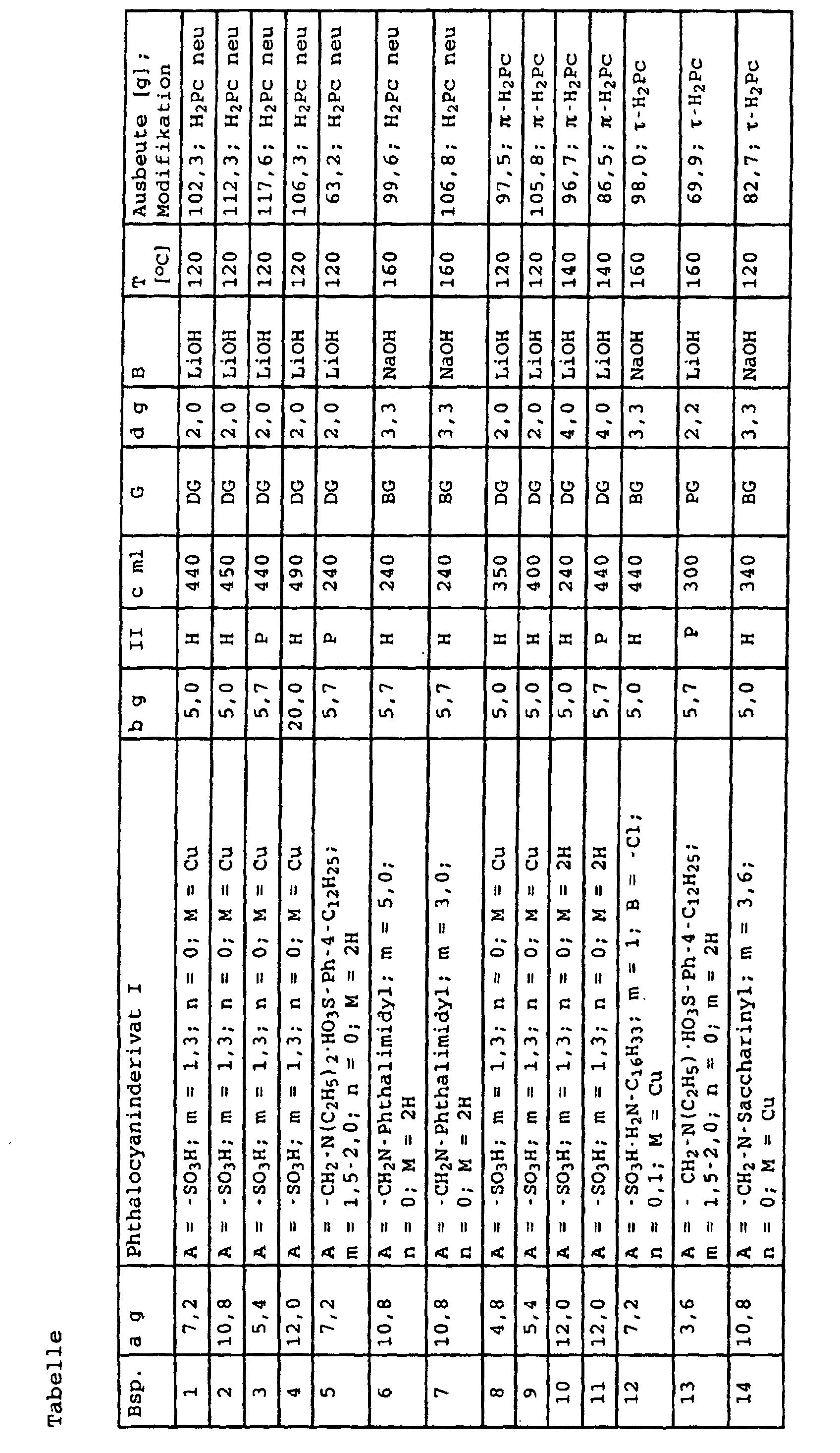

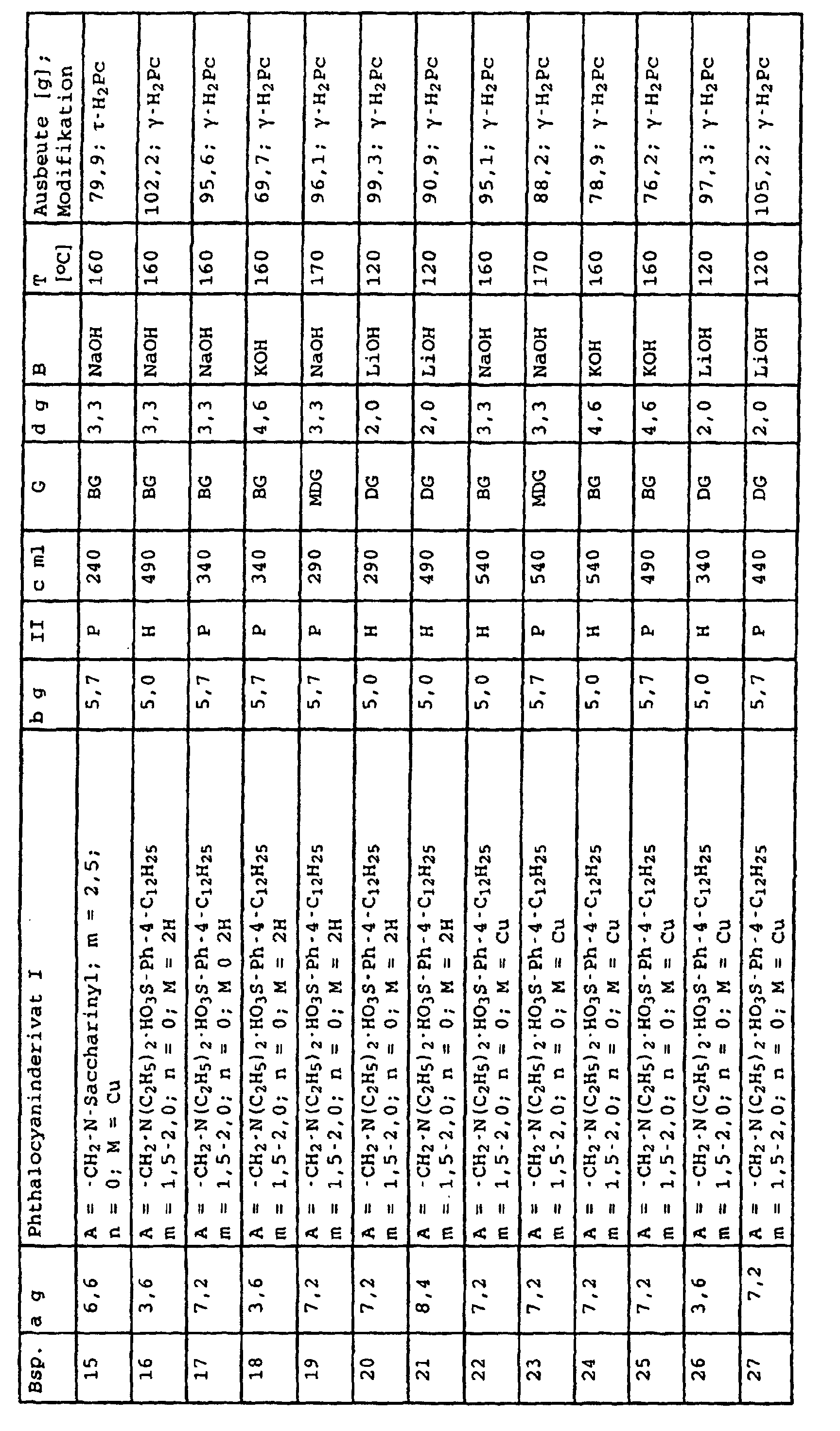

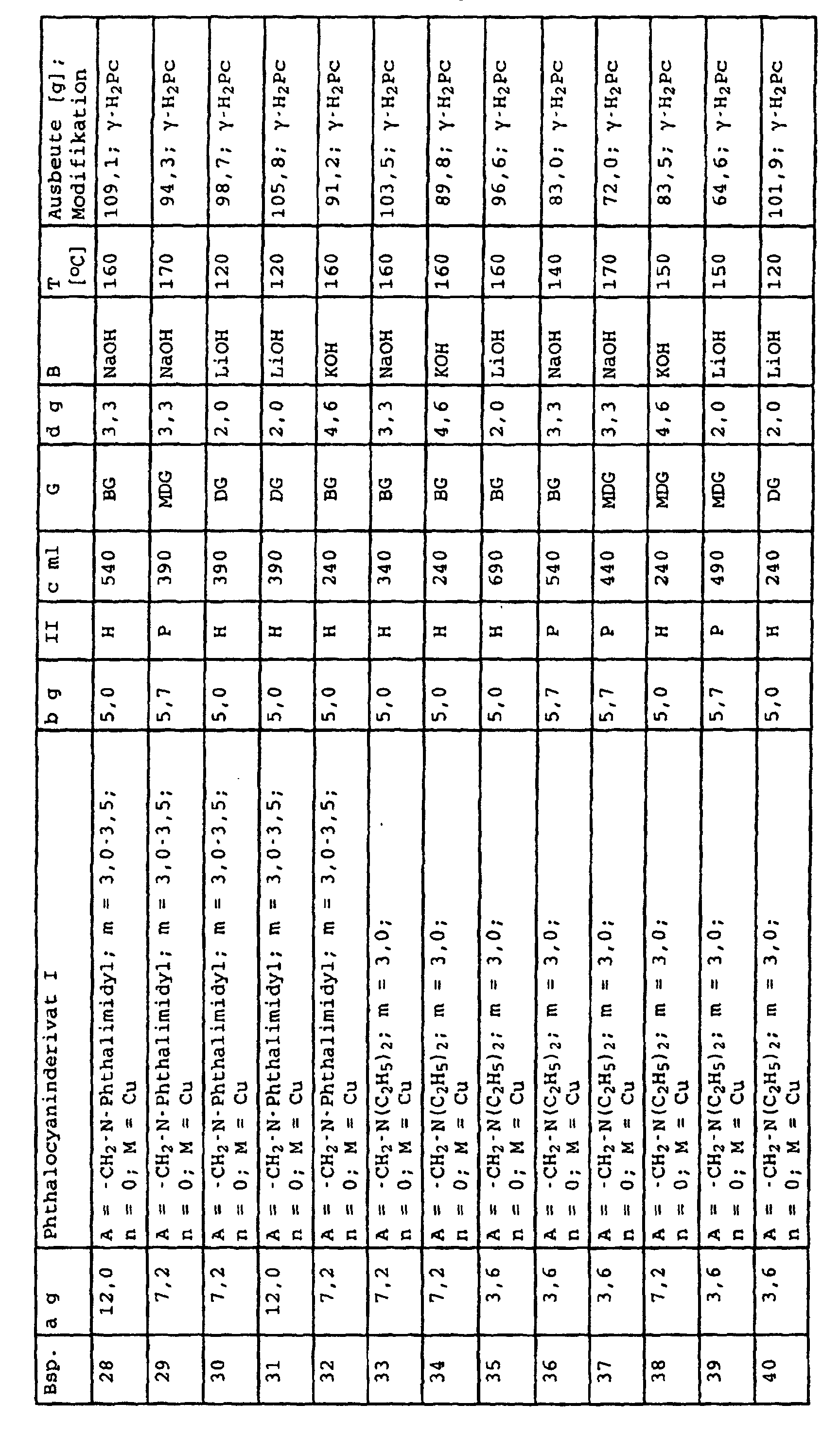

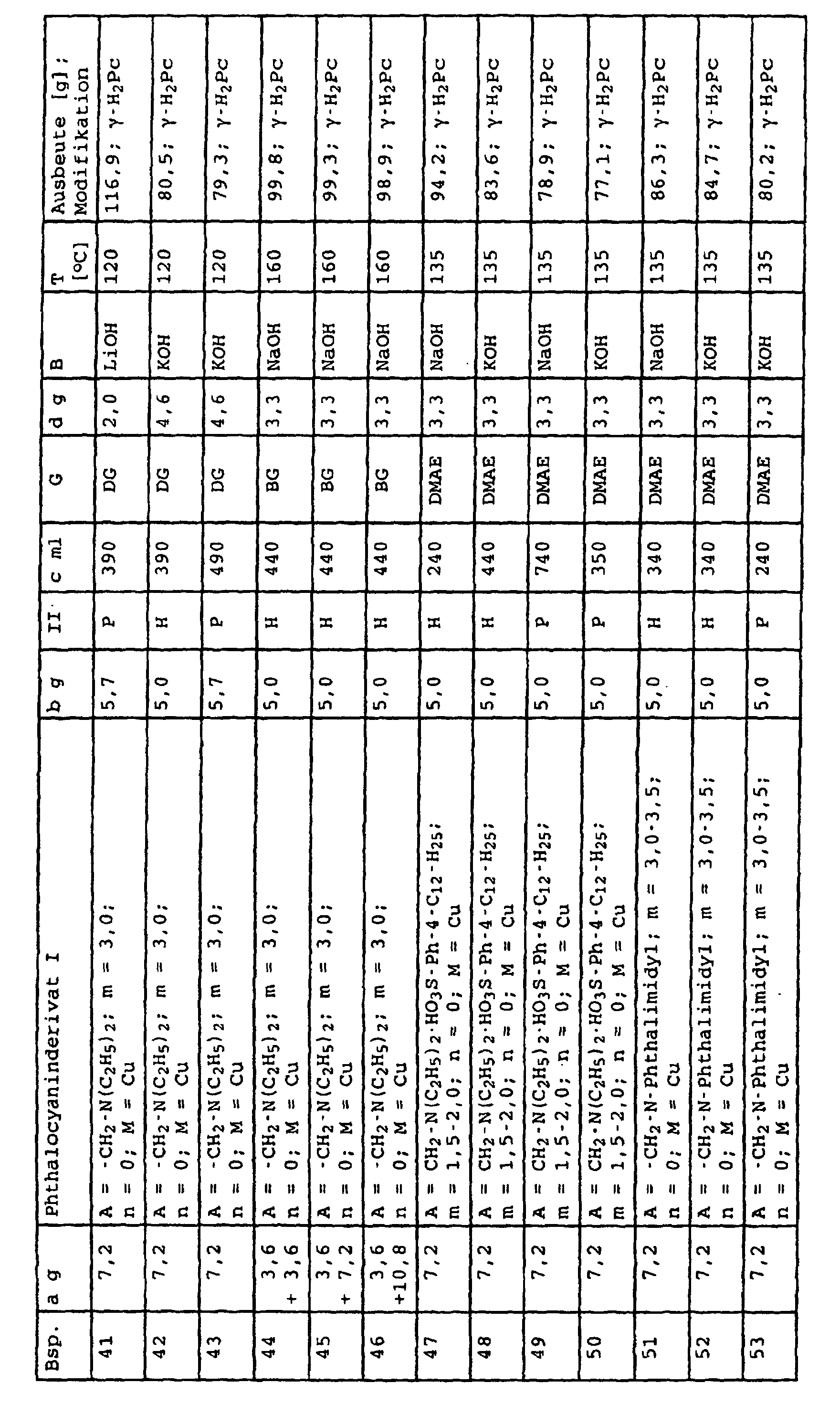

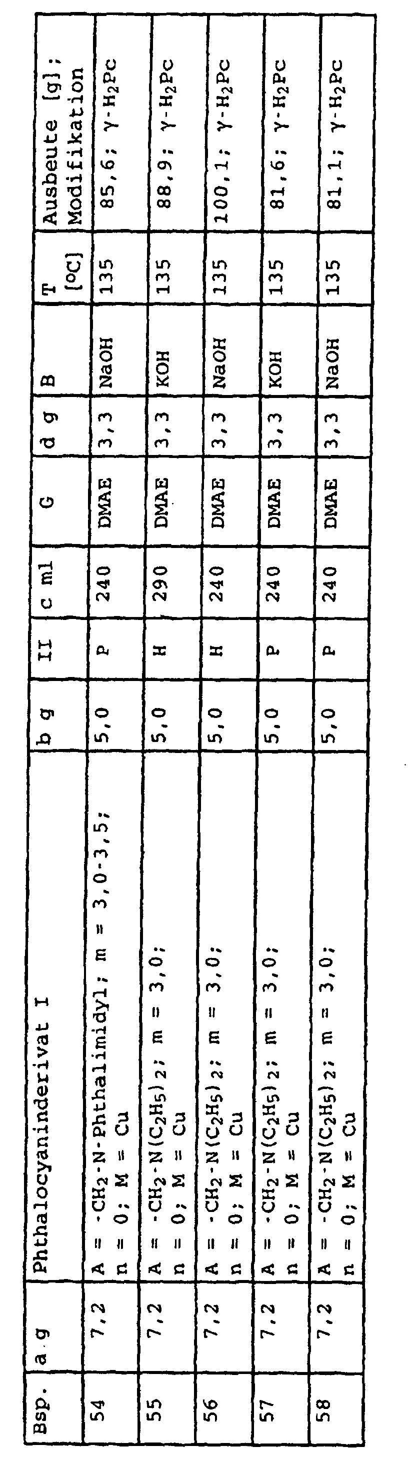

## Patentansprüche

1. Verfahren zur Herstellung von metallfreiem Phthalocyanin durch reduktive Cyclisierung von ortho-Phthalodinitril in Anwesenheit eines aliphatischen Alkohols, eines Redoxkatalysators und einer anorganischen Base, **dadurch gekennzeichnet, daß** man die Cyclisierung in Gegenwart eines oder mehrerer Phthalocyaninderivate aus der Gruppe der Phthalocyaninsulfonsäuren und -carbonsäuren und deren Alkalimetall-, Ammoniumund Alkylammoniumsalzen,der aminosubstituierten und aminomethylierten Phthalocyanine und deren Umsetzungsprodukten mit Alkylierungsmitteln, Sulfonsäuren, Sulfonsäurechloriden und Carbonsäurechloriden, der imidomethylen- und amidomethylensubstituierten Phthalocyanine, der alkyl-, aryl- und cyanosubstituierten Phthalocyanine, der hydroxy- und alkoxysubstituierten Phthalocyanine und deren Umsetzungsprodukten mit Tetraalkyl- und Tetraalkoxysilanen und der halogenierten Phthalocyanine durchführt.

2. Verfahren nach Anspruch 1, **dadurch gekennzeichnet, daß** man ein Phthalocyaninderivat der allgemeinen Formel I 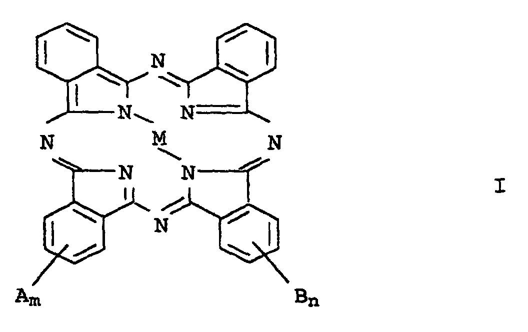 einsetzt, in welcher die Variablen folgende Bedeutung haben:
M Kupfer oder 2 Wasserstoffatome;
A und B unabhängig voneinander folgende Substituenten: -SO₃M¹, -CO₂M¹, -SO₃H·HNR¹R², -CH₂NR³R⁴, -NR³R⁴, -CH₂NR³R⁴·HO₃SR⁵, -NR³R⁴·HO₃SR⁵, -NHCOR¹, -CH₂NHCOR¹, -NHSO₂R¹, -CH₂NHSO₂R¹, -SO₂NHR¹, -CONHR¹, C₁-C₆-Alkyl, Aryl, Cyano, -OR⁶ oder Halogen, wobei
R¹ und R² unabhängig voneinander Wasserstoff oder C₂-C₂₀-Alkenyl oder C₁-C₂₀-Alkyl bedeuten, das durch -NR⁷R⁸ substituiert sein kann, wobei R⁷ und R⁸ unabhängig voneinander für C₁-C₂₀-Alkyl, C₅-C₈-Cycloalkyl, das ein oder mehrere Heteroatome enthalten kann, oder Wasserstoff stehen,
R³ und R⁴ unabhängig voneinander Wasserstoff, C₁-C₂₀-Alkyl, C₂-C₂₀-Alkenyl oder Aryl bedeuten oder unter Ausbildung eines das Stickstoffatom sowie gegebenenfalls weitere Heteroatome oder Carbonyl- oder Sulfonylgruppen enthaltenden, 5- oder 6-gliedrigen Rings, der benzanelliert sein kann, miteinander verbunden sind,
R⁵ für p-(C₁₀-C₂₀-Alkyl)phenyl oder C₂-C₂₀-Alkenyl steht;
R⁶ Wasserstoff, C₁-C₆-Alkyl oder -Si(R⁹)₃ bedeutet, wobei R⁹ für C₁-C₄-Alkyl, C₂-C₄-Alkenyl oder C₁-C₄-Alkoxy steht, und
M¹ Wasserstoff oder ein Alkalimetall bedeutet;
m eine ganze oder gebrochene Zahl > 0 bis 4,0;
n eine ganze oder gebrochene Zahl von 0 bis 4,0.

3. Verfahren nach Anspruch 1 oder 2, **dadurch gekennzeichnet, daß** man ein Phthalocyaninderivat der Formel I einsetzt, in der die Variablen folgende Bedeutung haben:
M Kupfer oder 2 Wasserstoffatome;
A und B unabhängig voneinander folgende Substituenten: -SO₃H, -SO₃H·HNR¹R², -CH₂NR³R^{4,} -CH₂NR³R⁴·HO₃SR⁵ oder Halogen, wobei
R¹ und R² unabhängig voneinander für C₁-C₂₀-Alkyl oder Wasserstoff stehen,
R³ und R⁴ unabhängig voneinander C₁-C₆-Alkyl oder Wasserstoff bedeuten oder unter Ausbildung eines das Stickstoffatom sowie Carbonyl- oder Sulfonylgruppen enthaltenden benzannelierten, 5-gliedrigen Rings miteinander verbunden sind;
R⁵ für p-(C₁₀-C₂₀-Alkyl)phenyl steht;
m eine ganze oder gebrochene Zahl > 0 bis 4;
n eine ganze oder gebrochene Zahl von 0 bis 4, wobei die Summe m + n einen Wert von 0,1 bis 4 annimmt.

4. Verfahren nach den Ansprüchen 1 bis 3, **dadurch gekennzeichnet, daß** man 1 bis 20 Gew.-%, bezogen auf die eingesetzte Menge an ortho-Phthalodinitril, des Phthalocyaninderivates einsetzt.

5. Verfahren nach den Ansprüchen 1 bis 4, **dadurch gekennzeichnet, daß** man als aliphatischen Alkohol C₂-C₅-Alkylenmono-, -oligo- oder -polyglykole, deren Mono-C₁-C₈-alkyl- oder -arylether oder Amino- oder N,N-Di-(C₁-C₄-alkyl)amino-C₂-C₆-alkohole oder deren Mischungen einsetzt.

6. Verfahren nach den Ansprüchen 1 bis 5, **dadurch gekennzeichnet, daß** man als Redoxkatalysator eine aromatische Verbindung der allgemeinen Formel II 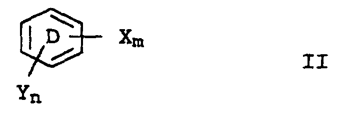 in der X Hydroxy oder Mercapto und Y Hydroxy, Mercapto, Amino, C₁-C₆-Alkylamino, Halogen, C₁-C₆-Alkyl, C₁-C₆-Alkoxy oder C₁-C₆-Alkoxycarbonyl bedeutet, m für eine ganze Zahl von 1 bis 4 und n für eine ganze Zahl von 0 bis 5 steht, wobei die Summe m + n ≤ 6 ist, und der Benzolring D an einen weiteren Benzolring anelliert sein kann, einsetzt.

7. Verfahren nach den Ansprüchen 1 bis 6, **dadurch gekennzeichnet, daß** man als Redoxkatalysator Di- oder Trihydroxybenzole einsetzt.

8. Verfahren nach den Ansprüchen 1 bis 7, **dadurch gekennzeichnet, daß** man als anorganische Base Alkalimetallhydroxide, -oxide, -carbonate oder deren Mischungen einsetzt.

9. Metallfreies Phthalocyanin einer neuen Modifikation, **gekennzeichnet durch** ein Röntgenpulverdiagramm (CuK_{α}) mit den wesentlichen Linien bei 2θ-Winkeln von 5.0, 8.3, 9.6, 13.0, 14.4, 16.8, 21.5, 24.2 und 26.8°.

10. Verwendung des metallfreien Phthalocyanins gemäß Anspruch 9 zur Einfärbung von Druckfarben, Lacken und Kunststoffen.

## Claims

1. A process for preparation of metal-free phthalocyanine by reductive cyclization of phthalonitrile in the presence of an aliphatic alcohol, of a redox catalyst and of an inorganic base, which comprises effecting the cyclization in the presence of one or more phthalocyanine derivatives selected from the group consisting of phthalocyanine-sulfonic acids and -carboxylic acids and their alkali metal, ammonium and alkylammonium salts, the amino-substituted and aminomethylated phthalocyanines and their reaction products with alkylating agents, sulfonic acids, sulfonyl chlorides and carbonyl chlorides, the imidomethylene- and amidomethylene-substituted phthalocyanines, the alkyl-, aryl- and cyano-substituted phthalocyanines, the hydroxyl- and alkoxy-substituted phthalocyanines and their reaction products with tetraalkyl- and tetraalkoxy-silanes and the halogenated phthalocyanines.

2. A process as claimed in claim 1, wherein the phthalocyanine derivative used has the general formula I 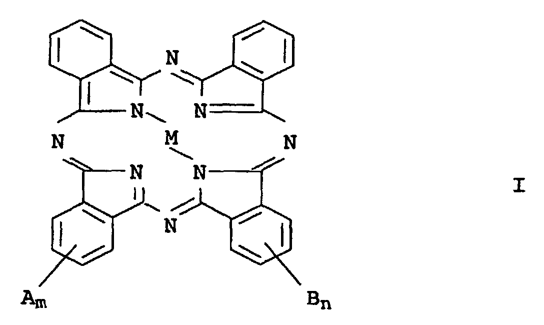 where
M is copper or 2 hydrogen atoms;
A and B are each independently selected from the following substituents: -SO₃M¹, -CO₂M¹, -SO₃H·HNR¹R², -CH₂NR³R⁴, -NR³R⁴, -CH₂NR³R⁴·HO₃SR⁵, -NR³R⁴·HO₃SR⁵, -NHCOR¹, -CH₂NHCOR¹, -NHSO₂R¹, -CH₂NHSO₂R¹, -SO₂NHR¹, -CONHR¹, C₁-C₆-alkyI, aryl, cyano, -OR⁶ and halogen, where
R¹ and R² are each independently of the other hydrogen or C₂-C₂₀-alkenyl or C₁-C₂₀-alkyl with or without -NR⁷R⁸ substitution, R⁷ and R⁸ each being independently of the other C₁-C₂₀-alkyl, C₅-C₈-cycloalkyl with or without one or more hetero atoms, or hydrogen,
R³ and R⁴ are each independently of the other hydrogen, C₁-C₂₀-alkyl, C₂-C₂₀-alkenyl or aryl or join to form a 5- or 6-membered ring which contains the nitrogen atom and optionally further heteroatoms or carbonyl or sulfonyl groups and is or is not benzofused,
R⁵ is p-(C₁₀-C₂₀-alkyl)phenyl or C₂-C₂₀-alkenyl,
R⁶ is hydrogen, C₁-C₆-alkyl or -Si(R⁹)₃, where R⁹ is C₁-C₄-alkyl, C₂-C₄-alkenyl or C₁-C₄-alkoxy, and
M¹ is hydrogen or an alkali metal;
m is an integer or fraction > 0 to 4.0; and
n is an integer or fraction from 0 to 4.0.

3. A process as claimed in claim 1 or 2, wherein the phthalocyanine derivative used has the formula I where
M is copper or 2 hydrogen atoms;
A and B are each independently selected from the following substituents: -SO₃H, -SO₃H·HNR¹R², -CH₂NR³R⁴, -CH₂NR³R⁴·HO₃SR⁵ and halogen, where
R¹ and R² are each independently of the other C₁-C₂₀-alkyl or hydrogen,
R³ and R⁴ are each independently of the other C₁-C₆-alkyl or hydrogen or join to form a benzofused 5-membered ring which contains the nitrogen atom and also carbonyl or sulfonyl groups;
R⁵ is p-(C₁₀-C₂₀-alkyl)phenyl;
m is an integer or fraction > 0 to 4; and
n is an integer or fraction from 0 to 4.0, subject to the proviso of the sum of m + n assuming a value from 0.1 to 4.

4. A process as claimed in any of claims 1 to 3, wherein the phthalocyanine derivative is used in an amount from 1 to 20 % by weight, based on the amount of phthalonitrile used.

5. A process as claimed in any of claims 1 to 4, wherein the aliphatic alcohol used is selected from C₂-C₅-alkylene mono-, oligo- or polyglycols, their mono-C₁-C₈-alkyl or -aryl ethers or amino- or N,N-di(C₁-C₄-alkyl)amino-C₂-C₆-alcohols or mixtures thereof.

6. A process as claimed in any of claims 1 to 5, wherein the redox catalyst used is an aromatic compound of the general formula II 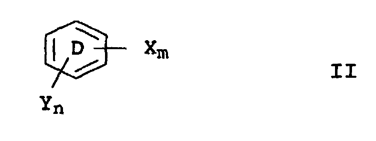 where X is hydroxyl or mercapto, Y is hydroxyl, mercapto, amino, C₁-C₆-alkylamino, halogen, C₁-C₆-alkyI, C₁-C₆-alkoxy or C₁-C₆-alkoxycarbonyl, m is an integer from 1 to 4, n is an integer from 0 to 5, subject to the proviso of the sum of m + n being ≤ 6, and the benzene ring D is or is not fused to a further benzene ring.

7. A process as claimed in any of claims 1 to 6, wherein the redox catalyst used is a di- or trihydroxybenzene.

8. A process as claimed in any of claims 1 to 7, wherein the inorganic base used is selected from alkali metal hydroxides, oxides, carbonates or mixtures thereof.

9. A metal-free phthalocyanine in a novel phase, **characterized by** an X-ray powder diagram (CuK_{α}) having the essential lines at 2θ angles of 5.0, 8.3, 9.6, 13.0, 14.4, 16.8, 21.5, 24.2 and 26.8°.

10. The use of the metal-free phthalocyanine as claimed in claim 9 for coloring printing inks, paints and plastics.

## Revendications

1. Procédé de préparation d'une phtalocyanine non métallifère, par cyclisation réductive d'ortho-phtalodinitrile en présence d'un alcool aliphatique, d'un catalyseur rédox et d'une base inorganique, **caractérisé en ce qu'**on met en oeuvre la cyclisation en présence d'un ou plusieurs dérivés de phtalocyanine choisis dans l'ensemble comprenant les acides phtalocyanine-sulfoniques et -carboxyliques et leurs sels de métaux alcalins, d'ammonium et d'alkylammonium, les phtalocyanines amino-substituées et amino-méthylées et les produits de leur réaction avec des agents d'alkylation, des acides sulfoniques, des chlorures de sulfonyle et des chlorures de carbonyle, les phtalocyanines à substitution imidométhylène et amidométhylène, les phtalocyanines à substitution alkyle, aryle et cyano, les phtalocyanines hydroxylées et alcoxylées et les produits de leur réaction avec des tétraalkyl- et des tétraalcoxysilanes, et les phtalocyanines halogénées.

2. Procédé selon la revendication 1, **caractérisé en ce qu'**on utilise un dérivé de phtalocyanine de formule générale I 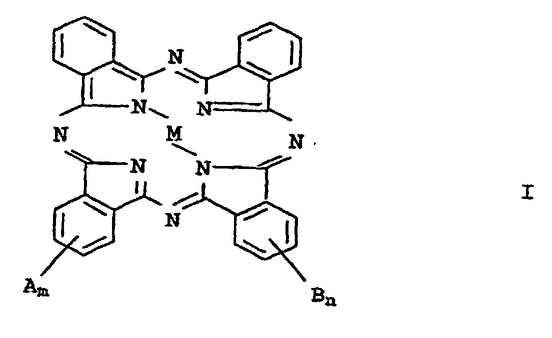 dans laquelle les variables ont les significations suivantes :
M représente un atome de cuivre ou 2 atomes d'hydrogène ;
A et B représentent chacun indépendamment de l'autre les substituants suivants : -SO₃M¹, -CO₂M¹, -SO₃H.HNR¹R², -CH₂NR³R⁴, -NR³R⁴, -CH₂NR³R⁴.HO₃SR⁵, -NR³R⁴.HO₃SR⁵, -NHCOR¹, -CH₂NHCOR¹, -NHSO₂R¹, -CH₂NHSO₂R¹, -SO₂NHR¹, -CONHR¹, les groupes alkyle en C₁-C₆, aryle, cyano, -OR⁶ ou halogéno, où
R¹ et R² représentent chacun indépendamment de l'autre un atome d'hydrogène ou un groupe alcényle en C₂-C₂₀ ou alkyle en C₁-C₂₀ pouvant être substitué par NR⁷R⁸, où R⁷ et R⁸ représentent chacun indépendamment de l'autre un groupe alkyle en C₁-C₂₀, cycloalkyle en C₅-C₈ pouvant contenir un ou plusieurs hétéroatomes, ou un atome d'hydrogène,
R³ et R⁴ représentent chacun indépendamment de l'autre un atome d'hydrogène, un groupe alkyle en C₁-C₂₀, alcényle en C₂-C₂₀ ou aryle, ou encore sont liés l'un à l'autre avec formation d'un noyau à cinq ou six chaînons, contenant l'atome d'azote et éventuellement d'autres hétéroatomes ou groupes carbonyle ou sulfonyle, qui peut être benzo-condensé,
R⁵ représente un groupe p-(alkyle en C₁₀-C₂₀)phényle ou alcényle en C₂-C₂₀;
R⁶ est un atome d'hydrogène, un groupe alkyle en C₁-C₆ ou -Si(R⁹)₃, où R⁹ est un groupe alkyle en C₁-C₄, alcényle en C₂-C₄ ou alcoxy en C₁-C₄, et
M¹ est un atome d'hydrogène ou un métal alcalin ;
m est un nombre entier ou fractionnaire > 0 et ≤ 4,0 ;
n est un nombre entier ou fractionnaire > 0 et ≤ 4,0.

3. Procédé selon la revendication 1 ou 2, **caractérisé en ce qu'**on utilise un dérivé de phtalocyanine de formule I dans laquelle les variables ont les significations suivantes :
M est un atome de cuivre ou 2 atomes d'hydrogène ;
A et B représentent chacun indépendamment de l'autre les substituants suivants : -SO₃H, -SO₃H.HNR¹R², -CH₂NR³R⁴, -CH₂NR³R⁴.HO₃SR⁵ ou un atome d'halogène, où
R¹ et R² représentent chacun indépendamment de l'autre un groupe alkyle en C₁-C₂₀ ou un atome d'hydrogène,
R³ et R⁴ représentent chacun indépendamment de l'autre un groupe alkyle en C₁-C₆ ou un atome d'hydrogène, ou encore sont liés l'un à l'autre avec formation d'un noyau à 5 chaînons, benzo-condensé, contenant l'atome d'azote et des groupes carbonyle ou sulfonyle ;
R⁵ est un groupe p-(alkyle en C₁₀-C₂₀)phényle ;
m est un nombre entier ou fractionnaire > 0 et ≤ 4 ;
n est un nombre entier ou fractionnaire > 0 et ≤ 4, la somme m + n valant de 0,1 à 4.

4. Procédé selon les revendications 1 à 3, **caractérisé en ce qu'**on utilise de 1 à 20 % en poids, par rapport à la quantité utilisée d'ortho-phtalodinitrile, du dérivé de phtalocyanine.

5. Procédé selon les revendications 1 à 4, **caractérisé en ce qu'**on utilise en tant qu'alcool aliphatique des (alkylène en C₂-C₅)mono-, -oligo- ou -polyglycols, leurs éthers mono(alkyliques en C₁-C₈ ou aryliques), ou des amino- ou N,N-di(alkyle en C₁-C₄)amino-(alcools en C₂-C₆) ou leurs mélanges.

6. Procédé selon les revendications 1 à 5, **caractérisé en ce qu'**on utilise en tant que catalyseur rédox un composé aromatique de formule générale II 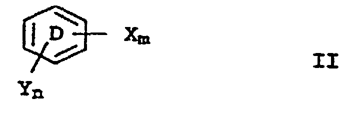 dans laquelle X est un groupe hydroxy ou mercapto et Y est un groupe hydroxy, mercapto, amino, alkylamino en C₁-C₆, halogéno, alkyle en C₁-C₆, alcoxy en C₁-C₆ ou (alcoxy en C₁-C₆)carbonyle, m est un nombre entier de 1 à 4 et n est un nombre entier de 0 à 5, la somme m + n étant ≤ 6, et le noyau benzénique D peut être condensé à un autre noyau benzénique.

7. Procédé selon les revendications 1 à 6, **caractérisé en ce qu'**on utilise en tant que catalyseur rédox des di- ou trihydroxybenzènes.

8. Procédé selon les revendications 1 à 7, **caractérisé en ce qu'**on utilise en tant que base organique des hydroxydes, oxydes, carbonates de métaux alcalins ou leurs mélanges.

9. Phtalocyanine non métallifère correspondant à une nouvelle modification, **caractérisée par** une image aux rayons X obtenue par la méthode des poudres (CuK_{α}) présentant des raies principales pour des angles 2θ de 5,0, 8,3, 9,6, 13,0, 14,4, 16,8, 21,5, 24,2 et 26,8°.

10. Utilisation de la phtalocyanine non-métallifère selon la revendication 9 pour colorer dans la masse des encres d'imprimerie, des peintures et vernis, et des plastiques.
